# EUROPEAN PATENT SPECIFICATION

(11) **EP 3 383 654 B1**
(45) Date of publication and mention of the grant of the patent: **13.01.2021**
(21) Application number: 17764269.1
(22) Date of filing: 11.03.2017
(51) Int. Cl.: B32B 27/40, B32B 27/36, B32B 7/02

(54) **PROTECTIVE SHEETS, ARTICLES, AND METHODS**
SCHUTZFOLIEN, -ARTIKEL UND -VERFAHREN
FEUILLES PROTECTRICES, ARTICLES, ET PROCÉDÉS

(30) Priority: 11.03.2016 US 201662306645 P
(43) Date of publication of application: 10.10.2018
(73) Proprietor: Entrotech, Inc., Columbus, OH 43212 (US)
(72) Inventor: MCGUIRE, James, Jr., Palm Beach, Florida 33480 (US); STRANGE, Andrew, Worthington Ohio 43085 (US)
(74) Representative: Laufhütte, Dieter
(86) International application number: PCT/US2017/021981
(87) International publication number: WO 2017/156506

(56) References cited:
- US-A1- 2006 046 028
- US-A1- 2010 068 446
- US-A1- 2014 212 674
- US-A1- 2014 212 674
- US-A1- 2015 044 456
- US-A1- 2016 062 016
- US-B1- 6 479 142

## Description

### BACKGROUND OF THE INVENTION

The present invention relates generally to sheets useful for protecting surfaces, methods of making and using the same, and articles comprising applied sheets of the invention.

A variety of protective sheets are known. Many of those are based on one or more polyurethane layers. Polyurethane chemistries generally provide one or more properties including the following: environmental resistance, chemical resistance, abrasion resistance, scratch resistance, optical transparency, and other often desirable properties.

There are many commercially available single-layer polyurethane films from a variety of suppliers such as Argotec, LLC (Greenfield, MA) and entrotech, Inc. (Columbus, OH). Single-layer polyurethane films have been found useful as carrier layers in multi-layer sheet applications. Such films, however, have found limited use by themselves for protection of certain types of surfaces. For example, protection of painted surfaces often requires retention of the glossy appearance otherwise provided by a recently painted surface. One of the problems associated with single-layer polyurethane films is their often inadequate ability to retain the glossy appearance desired.

Attempts have been made to combine polyurethane films with other materials in the form of a multi-layer protective sheet in order to improve properties of the films, such as gloss retention and environmental resistance. In some cases, an exterior (or topcoat) layer is applied to a polyurethane carrier layer in order to impart such improved properties. The inclusion of additional layers of material within a protective sheet can negatively impact other properties, however; for example, flexibility of the protective sheet generally decreases as more and thicker layers of material are included in protective sheet constructions. Decreased flexibility can not only make it more difficult to adequately conform the protective sheet for adequate adherence to contoured surfaces, but it can also lead to premature edge lift of the protective sheet during use. In addition, inadequate compatibility between adjacent layers can lead to potential interlayer delamination within such multi-layer protective sheets.

Several protective sheets are readily available on the market today. For example, Minnesota Mining & Manufacturing Co. ("3M") in St. Paul, MN, markets polyurethane-based sheet "Paint Protection Film" under the SCOTCHGARD and VENTURESHIELD product lines. PCT Patent Publication No. WO 02/28636 describes a finishing film comprising a flexible polymeric sheet material having a first major surface and a second major surface and a pressure sensitive adhesive layer covering at least a portion of the first major surface of the sheet material. The finishing film is described as being commercially available from 3M Co. under the trade designation, SCOTCHCAL PAINT PROTECTION FILM PUL 0612, and comprising a 6 mil polymer film comprising an aliphatic polycaprolactone-based thermoplastic urethane elastomer. Examples of methods for formation of the polymer film described therein are extrusion, calendaring, wet casting, and the like. Thereafter, a waterborne polyurethane coating is formed on one side of the polymer film, with the other side of the polymer film being laminated to an acrylic pressure sensitive adhesive.

PCT Patent Publication No. WO 03/002680 describes an adhesive sheet comprising a flexible base material, an adhesive layer disposed on a back surface of said base material, and a protective layer disposed on a front surface of the base material. The protective layer described in PCT Patent Publication No. WO 03/002680 is made of a hydrophilic film containing a curing resin and a hydrophilic agent of an inorganic oxide. The base material contains a layer containing a first polyurethane resin having a reaction product of polyester polyol and a polyfunctional isocyanate compound. Preferably, the base material comprises a lower layer containing the first polyurethane resin and an upper layer disposed between the lower layer and the protective layer that adheres to the protective layer and contains a second polyurethane resin having a reaction product of a polycarbonate polyol and a polyfunctional isocyanate compound. The upper layer preferably comprises a hard polyurethane resin in comparison with the first polyurethane resin of the lower layer to enable adhesion between the entire base material and the protective layer to be effectively increased through the upper layer, even if the curing resin in the protective layer is comparatively hard and has a low-temperature elongation differing to a large extent from that of the lower layer of the base material. The polyester polyol forming the first polyurethane resin may be formed from a diol having caprolactonediol in the main chain.

U.S. Patent No. 8,765,263 describes a multilayer protective film comprising a first layer, a second layer and a pressure sensitive adhesive (PSA) layer. The first layer at least comprises a polyester-based polyurethane, a polycarbonate-based polyurethane, or a combination or blend of both. The second layer at least comprises a polycaprolactone-based thermoplastic polyurethane. One major surface of the first layer is bonded to one major surface of the second layer, and the PSA layer is bonded to an opposite major surface of the second layer such that the second layer is sandwiched between the first layer and the PSA layer. The predominant method of forming the second layer is described as extruding the polycaprolactone-based thermoplastic polyurethane at an elevated temperature through a die, although casting and injection molding are also described.

US Patent Publication No. US-20150-044456-A1 discloses a substrate with polyester surfaces on both sides, a layer of polycarbonate-based polyurethane, and an adhesive adjacent to it.

Due to its superior rheological and viscoelastic properties over many of its aliphatic polyester counterparts as well as its ability to impart good water, oil, solvent, and chlorine resistance to the polyurethane produced, polycaprolactone-based polyurethane is often used in protective sheets. In each of the three aforementioned 3M patent publications describing such a use of polycaprolactone-based polyurethane, the polycaprolactone-based polyurethane layer is positioned adjacent the adhesive layer. It is known, however, that commercially available paint protection film products are prone to leaving a less than desirable amount of adhesive residue on a surface when removed therefrom after use. The presence of adhesive residue on a surface to be protected is counter to the concept of a protective sheet. Thus, alternative protective sheet configurations are still needed in order to further improve properties thereof.

### BRIEF SUMMARY OF THE INVENTION

The invention relates to a multi-layer protective sheet as defined in claim 1. Multi-layer protective sheets of the invention are useful in a range of indoor and outdoor applications in, for example, the transportation, architectural and sporting goods industries. The protective sheets can advantageously be applied to at least a portion of a surface of any article where protection is desired. The surface to be protected can be painted or unpainted.

Methods of the invention include those for applying protective sheets of the invention to articles. Protective sheets of the invention are useful in a range of indoor and outdoor applications in, for example, the transportation, architectural, and sporting goods industries. Such articles include, for example, motorized vehicles and bicycles amongst a multitude of other applications.

As compared to conventional protective sheets, which often include a polycaprolactone-based polyurethane layer adjacent the adhesive layer, protective sheets of the present invention have improved properties. Protective sheets of the invention do not include a polycaprolactone-based polyurethane layer or the like adjacent the adhesive layer, the result being an unexpected improvement in one or more desired properties.

As used herein, "loss factor" refers to the ratio of loss modulus to storage modulus for a resilient layer or carrier layer so tested. The loss factor is ultimately an indication of the effectiveness of a material's damping qualities. The "peak loss factor" refers to the highest loss factor value determined when the resilient layer or carrier layer is so tested. The higher the loss factor of a material, the more efficient the material will be in effectively accomplishing energy absorption and dispersal.

According to one aspect of the invention, protective sheets of the invention comprise a resilient layer between the carrier layer and the adhesive layer. In one embodiment, the resilient layer has a peak loss factor of less than about 0.25 when measured over a temperature range of about -30°C. to about 100°C., and preferably a peak loss factor of less than about 0.20 when measured over a temperature range of about 0°C. to about 40°C., when tested as a standalone film according to the Loss Factor Test Method described below.

According to an exemplary embodiment of the invention, a multi-layer protective sheet of the invention comprises sequential layers as follows: a carrier layer; a resilient layer; and, an adhesive layer. According to a further embodiment, a multi-layer protective sheet comprises sequential layers as follows: a topcoat layer; a carrier layer; a resilient layer; and, an adhesive layer.

### BRIEF DESCRIPTION OF THE SEVERAL VIEWS OF THE DRAWINGS

Figure 1 is a graph of Loss Factor (also referred to as Tan Delta) versus Temperature for resilient layers and carrier layers used in protective sheets of the invention.
Figure 2A is a graph of Storage Modulus versus Temperature for resilient layers and carrier layers used in protective sheets of the invention.
Figure 2B is a subset of the graph of Figure 2A.

### DETAILED DESCRIPTION OF THE INVENTION

The present invention is directed toward improved multi-layer protective sheets as defined in claim 1. Protective sheets of the invention are advantageously not only capable of protecting a surface, but also capable of being more cleanly removed therefrom than conventional protective sheets without resilient layers between the carrier layer (a polycaprolactone-based polyurethane carrier layer) and adhesive layer therein.

According to one aspect of the invention, adhesive residue remaining on a surface from which the protective sheet is removed after use is minimized or eliminated by providing a resilient layer between the carrier layer and the adhesive layer. Including a resilient layer adjacent the adhesive layer facilitates better continued anchorage of the adhesive layer during application of the multi-layer protective sheet and, hence, less residual adhesive on a surface after removal of the protective sheet therefrom.

According to another aspect of the invention, properties of individual layers within a multi-layer protective sheet are better balanced according to the invention when using such a resilient layer. For example, when a relatively high modulus topcoat layer is present within the protective sheet, the resilient layer included between the carrier layer and adhesive layer facilitates better balanced properties. Preferably, modulus of the topcoat layer is within about 50%, more preferably within about 30%, and more preferably within about 15%, of modulus of the resilient layer when measured according to the same test method.

Many topcoat layers exhibit a relatively high modulus and are relatively elastic as compared to the relatively viscoelastic carrier layer within a protective sheet. Preferably, the resilient layer is more elastic than the adjacent and relatively viscoelastic carrier layer, such that the resilient layer does not exhibit the degree of time dependent strain recovery of the viscoelastic carrier layer. Given the improved balance of properties of individual layers therein, when the protective sheet is stretched and then released, rate and degree of recovery is generally more uniform across thickness of the protective sheet when the protective sheet is stretched and/or impacted.

Preferably, multi-layer protective sheets of the invention are advantageously not only capable of protecting a surface with better balanced properties and leaving less residual adhesive after removal from a surface, but they also have enhanced recoverability to enable protection and ease of application to non-planar surfaces. As used herein, "recoverability" refers to a material's ability to be stretched and recover to essentially its original state after stretching. Preferred multi-layer protective sheets are capable of recovering to essentially their original state when stretched (i.e., elongated) to a length of up to about 125% of their initial length. Preferably, multi-layer protective sheets are capable of recovering to essentially their original state when stretched to a length of up to about 150% of their initial length. According to one aspect of the invention, multi-layer protective sheets are capable of elongating to a length of up to more than about 200% of their initial length before breaking.

According to an exemplary embodiment of the invention, a multi-layer protective sheet of the invention comprises a resilient layer with a carrier layer on one major surface thereof and an adhesive layer on an opposite major surface thereof. According to a further embodiment, a multi-layer protective sheet comprises sequential layers as follows: an optional topcoat layer; a carrier layer; a resilient layer; and, an adhesive layer. Each of those layers is described in further detail below.

### Carrier Layer

The term "carrier layer" is used herein to refer to the layer(s) of film adjacent the resilient layer and on an opposite side thereof from the adhesive layer. In certain contexts, a carrier layer may also be referred to as a "base layer" or a similar designation. In general, the carrier layer of protective sheets of the invention is referred to as a "mid-ply layer" when it contains multiple layers (i.e., "n" number of individual layers). However, the carrier layer of protective sheets of the invention can be a single film layer according to other embodiments of the invention. When multiple layers form the carrier layer, each of the "n" individual layers can be the same or different chemistries. In an exemplary embodiment, each of the "n" individual layers has essentially the same chemistry.

In an exemplary embodiment, carrier layers used in protective sheets of the invention are polyurethane-based. For simplicity, the term "polyurethane" as used herein includes polymers containing urethane (also known as carbamate) linkages, urea linkages, or combinations thereof (i.e., in the case of poly(urethane-urea)s). Thus, polyurethane-based carrier layers contain at least urethane linkages, urea linkages, or combinations thereof. Furthermore, polyurethane-based carrier layers are based on polymers where the polymeric backbone has at least 80% urethane and/or urea repeat linkages formed during the polymerization process.

Polyurethane-based carrier layers are prepared according to methods of the invention by reacting components, which include at least one isocyanate-reactive (e.g., hydroxy-functional, such as polyol) component and at least one isocyanate-functional (e.g., polyisocyanate) component. For example, components of exemplary polymerizable compositions and which are useful in the formation of polyurethane-based carrier layers according to methods of the invention are described in U.S. Patent Publication No. US-2011-0241261-A1. Such carrier layers, which provide improvements in protective sheets as described in U.S. Patent Publication Nos. US-2018-0163094 A1- and US-2019-0161646-A1, can be used in conjunction with resilient layers in protective sheets of the present invention.

In exemplary embodiments, polymerization of the polymerizable composition is initiated using at least one radiation source selected from ultraviolet radiation, thermal radiation, and electron beam radiation. Methods of the invention can utilize continuous processing or batch processing. For example, continuous processing, such as web-based polymerization of the polyurethane-based carrier layer using relatively low energy ultraviolet radiation, can be used in one embodiment of the invention. As another example, batch processing, such as coating an ultraviolet-curable composition on a discrete substrate and irradiating the same to form the polyurethane-based carrier layer can be used in another embodiment of the invention.

According to a preferred aspect of methods of the invention, the polymerizable composition for formation of the polyurethane-based carrier layer is essentially free of solvents. In addition to, for example, environmental and safety concerns associated with solvent-based processing, solvent-based processing typically entails use of elevated temperatures for effective removal of excess solvent from the polymerized composition. It is preferred that polyurethane-based carrier layers are essentially free of unreacted solvent. Thus, it is preferred that the polymerizable compositions from which they are formed are essentially free of solvents.

Given its recognized beneficial properties, the carrier layer comprises a polycaprolactone-based polyurethane according to the invention. Any suitable polycaprolactone-based polyurethane can be used for the carrier layer. For example, Argotec, LLC (Greenfield, MA) supplies such films under the ARGOTEC 46510, ARGOTEC 49510, and ARGOTEC 49510-60DV trade designations.

Any suitable additives can be present in the carrier layer. Other additives are selected as known to those skilled in the art based on the intended application. Those skilled in the art are readily able to determine the amount of such additives to use for the desired effect.

According to one embodiment of the invention, the carrier layer has a thickness of about 5 microns to about 1,250 microns. Each of the "n" number of individual film layers therein can be as thin as about 5 microns and up to about 50 microns in thickness, the presence of thicker layers being particularly useful for ballistic applications. However, to impart greater recoverability, a carrier layer having a thickness of about 220 microns or less is used according to one aspect of the invention. According to further aspects, the carrier layer has a thickness of about 180 microns or less. For example, the carrier layer can have a thickness of about 120 microns to about 180 microns. Not only is recoverability of the carrier layer, and hence overall protective sheet, enhanced by using a thinner carrier layer, overall cost of the sheet is reduced in this manner.

### Resilient Layer

Protective sheets of the invention advantageously comprise a resilient layer between the carrier layer and the adhesive layer. By "resilient," it is to be understood that such a layer is capable of being stretched, bent, or compressed and returning to essentially its original state thereafter. The resilient layer is more resilient than both of the adjacent layers - *i.e.,* the carrier layer and the adhesive layer. This property of the resilient layer translates to the adjacent adhesive layer, resulting in less adhesive residue on a surface upon removal of the protective sheet therefrom after its application.

As used herein, "loss factor" refers to the ratio of loss modulus to storage modulus for a resilient layer or carrier layer so tested. The "peak loss factor" refers to the highest loss factor value determined when the resilient layer or carrier layer is so tested.

In one embodiment, the resilient layer has a peak loss factor of less than about 0.25 when measured over a temperature range of about -30°C. to about 100°C., and preferably a peak loss factor of less than about 0.20 when measured over a temperature range of about 0°C. to about 40°C., when tested as a standalone film according to the Loss Factor Test Method described below.

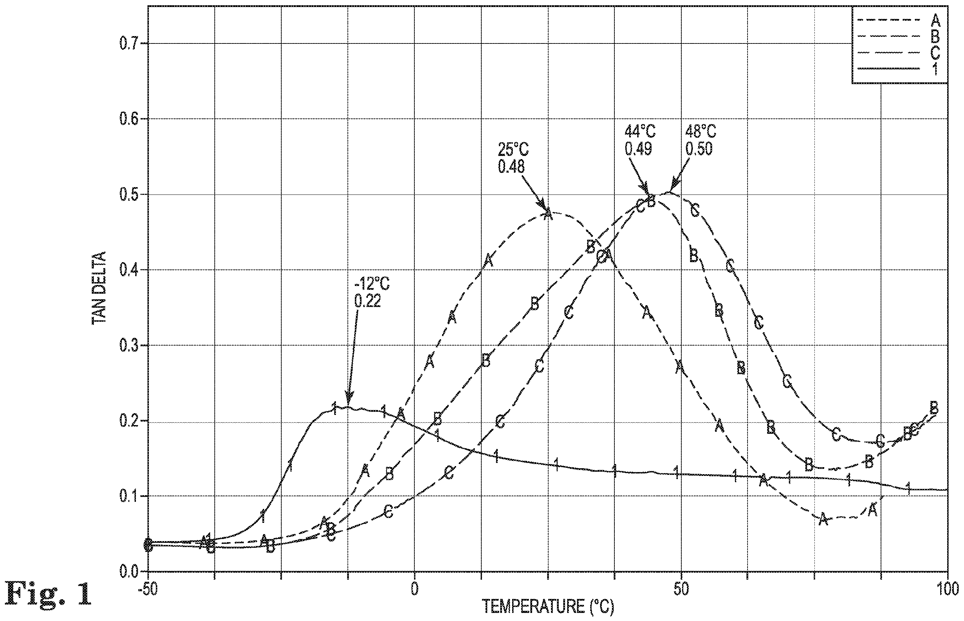

As illustrated in Figure 1, the peak loss factor (referred to therein as "Tan Delta") of a resilient layer so tested (*i.e*., as illustrated by the data curve labeled 1) was significantly lower than that of conventional carrier layer films (*i.e*., as illustrated by the data curves labeled A, B, and C, representing polyurethane-based carrier layers commercially available from Argotec, LLC (Greenfield, MA) under the respective trade designations, ARGOTEC 49510, ARGOTEC 49510-60DV, and ARGOTEC 46510). As also illustrated in Figure 1, the peak loss factor for the resilient layer so tested occurred at about -15°C., while the peak loss factors for conventional carrier films so tested occurred at about a temperature of at least about 25°C. Between temperatures of 25°C. and 50°C., the peak loss factor of the resilient layer is less than one-half of the peak loss factor of what could be an adjacent conventional carrier layer, as illustrated in Figure 1 by comparing data curve 1 to the data curves labeled A, B, and C within this temperature range. In this temperature range, the resilient layer exhibits elastic-type characteristics as compared to the conventional carrier layers illustrated exhibiting their most viscoelastic-type characteristics in this range.

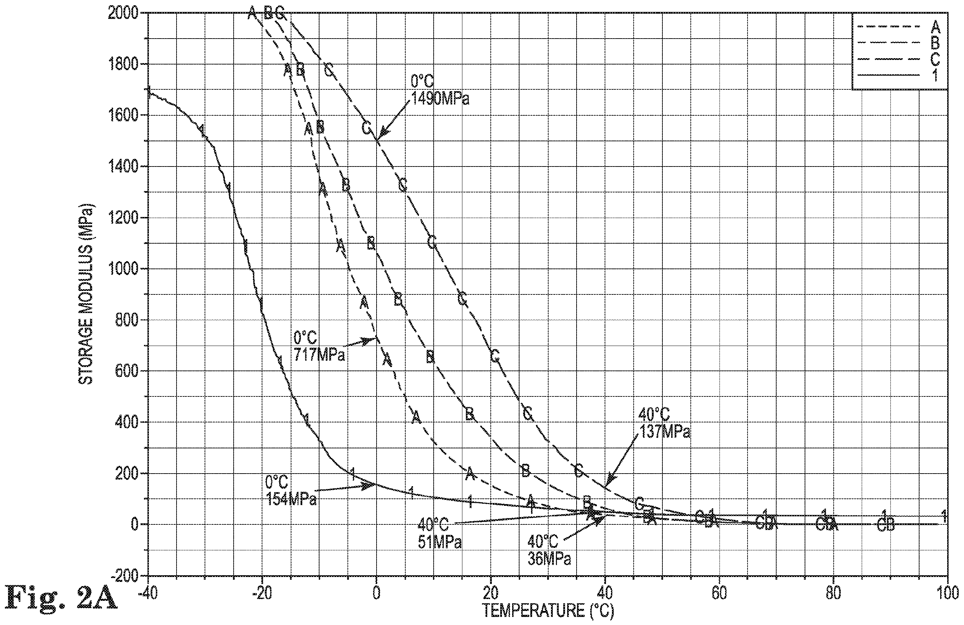

As illustrated in Figures 2A-2B, at a temperature of 0°C. when tested as a standalone film according to the Storage Modulus Test Method described below, storage modulus of an exemplary resilient layer is less than about 50% of storage modulus of what could be an adjacent conventional carrier layer, as illustrated by comparing data curve 1 to the data curves labeled A, B, and C at this temperature. According to other embodiments illustrated, storage modulus of the resilient layer is less than about 40% or even less than about 30% of storage modulus of what could be an adjacent conventional carrier layer when so tested.

In an exemplary embodiment, the resilient layer has a storage modulus of less than about 500 MPa when measured at a temperature of 0°C. when tested as a standalone film according to the Storage Modulus Test Method described below. According to a further exemplary embodiment, the resilient layer has a storage modulus of less than about 300 MPa or even less than about 200 MPa when so tested.

In another exemplary embodiment, the resilient layer has a storage modulus of less than about 150 MPa when measured at a temperature greater than 0°C. when tested as a standalone film according to the Storage Modulus Test Method described below. In further embodiments, the resilient layer has a storage modulus of less than 100 MPa in certain embodiments, or even less than about 50 MPa in other embodiments, when measured at a temperature greater than 0°C. when tested as a standalone film according to the Storage Modulus Test Method described below.

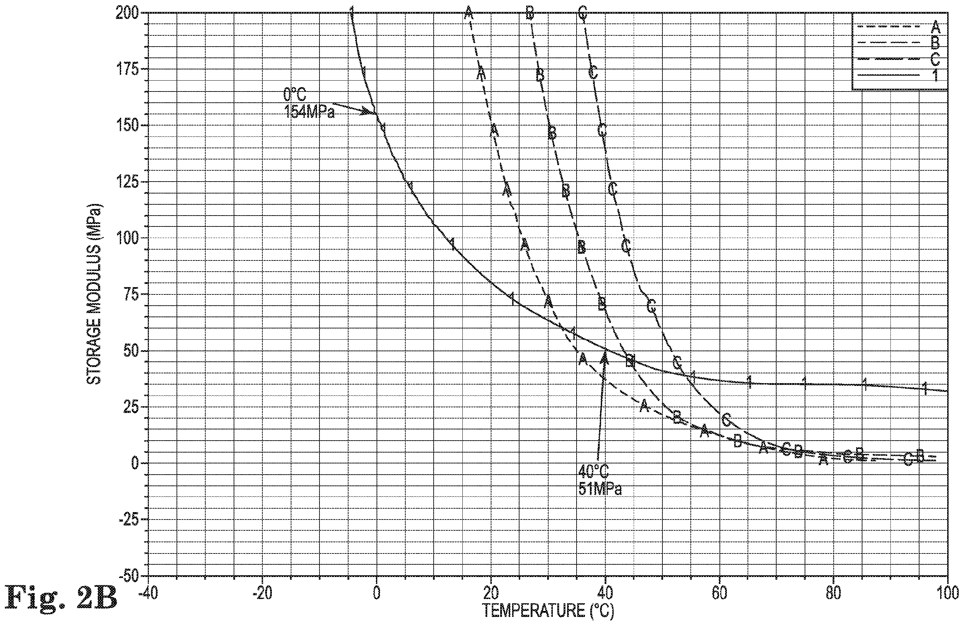

Preferably, the storage modulus of the resilient layer so tested decreases less than about 200%, more preferably less than about 150%, and even more preferably less than about 100%, when so measured at temperatures increasing from about 0°C. as compared to that storage modulus measured at 0°C. As illustrated in Figures 2A and 2B, the storage moduli of a resilient layer so tested (*i.e.*, as illustrated by the data curve labeled 1) corresponded with these properties as compared to those of conventional carrier layer films (*i.e*., as illustrated by the data curves labeled A, B, and C, representing polyurethane-based carrier layers commercially available from Argotec, LLC (Greenfield, MA) under the respective trade designations, ARGOTEC 49510, ARGOTEC 49510-60DV, and ARGOTEC 46510). According to one aspect of this embodiment, over a temperature range of 0°C. to 40°C., at least about 10%, preferably at least about 20%, and more preferably at least about 30% of storage modulus of the resilient layer is retained. In comparison, over the same temperature range, less than about 10% of storage modulus of conventional carrier layer films is retained.

Indeed, properties vary according to temperature. As illustrated in Figures 2A-2B, at a temperature of 75°C. when tested as a standalone film according to the Storage Modulus Test Method described below, storage modulus of an exemplary resilient layer is at least about 200% of storage modulus of what could be an adjacent conventional carrier layer, as illustrated by comparing data curve 1 to the data curves labeled A, B, and C at this temperature. According to other embodiments illustrated, storage modulus of the resilient layer is at least about 300% or even at least about 400% of storage modulus of what could be an adjacent conventional carrier layer when so tested. According to one aspect of the invention, storage modulus of the resilient layer is at least about seven times the storage modulus of what could be an adjacent conventional carrier layer when so tested - *e.g.,* 35 MPa vis-à-vis less than about 5 MPa.

Polycarbonate-based and polyurethane-based resilient layers are used according to the invention for the resilient layer. See U.S. Patent No. 4,476,293 for a description of exemplary polycarbonate-based polyurethanes.

Although any suitable additives may be present in the resilient layer as understood by one of ordinary skill in the art, if crosslinkers are present, they are generally used in an amount of less than about 4 parts by weight, and preferably less than about 2 parts by weight, based on 100 parts by weight of any polymer crosslinkable therewith prior to any crosslinking reaction. Further, crosslinkers may be present if they are not used in combination with polymers that are crosslinkable therewith or where, if crosslinkable, resulting crosslink density is minimal (*e.g*., due to minimal reactive sites on the base polymer) so as not to significantly affect desired properties of the protective sheet. In a preferred embodiment, the resilient layer is essentially free of crosslinkers and reaction products thereof. As such, crosslinkers and reaction products are not discernible when using chemical analysis.

Any suitable method can be used for preparation of resilient layers of the invention. In one embodiment, the resilient layer is prepared and formed into a film using an extruder. In another embodiment, a resilient layer can be prepared and formed into a film using solution or dispersion chemistry and film coating techniques known to those skilled in the art.

### Adhesive Layer

The adhesive layer is present adjacent the resilient layer and on a major planar side of the resilient layer opposite from that on which the carrier layer is present. Any suitable adhesive can be used for the adhesive layer according to the invention. In a preferred embodiment, the adhesive layer comprises a pressure-sensitive adhesive.

While any suitable chemistry can be used for the base polymer in the adhesive layer, (meth)acrylate - acrylate and methacrylate - chemistry is preferred. However, other suitable chemistries are known to those skilled in the art and include, for example, those based on synthetic and natural rubbers, polybutadiene and copolymers thereof, polyisoprene or copolymers thereof, and silicones (*e.g*., polydimethylsiloxane and polymethylphenylsiloxane). Any suitable additives can be present in conjunction with the base polymer in the adhesive layer.

In particular, an adhesive based on 2-ethyl hexyl acrylate, vinyl acetate, and acrylic acid monomers polymerized as known to those skilled in the art was found useful in one embodiment of the invention. The adhesive can be crosslinked, for example, using conventional aluminum or melamine crosslinkers.

In one embodiment, the adhesive layer has a thickness of about 5 microns to about 150 microns. In a further embodiment, the adhesive layer has a thickness of about 30 microns to about 100 microns.

Until its application on a surface, the adhesive layer can be protected using, for example, a conventional release liner. As such, the sheet can be stored and shipped easily in roll or other forms until its application.

### Optional Topcoat Layer

In general, any outwardly exposed non-adhesive layer on a side of the carrier layer opposite the resilient layer in protective sheets of the invention is referred to as the "topcoat layer." Consistent with its name, the optionally present topcoat layer is an outwardly exposed, exterior layer of the protective sheet as applied to an article. Any suitable type of material can be used for the topcoat layer in protective sheets of the invention. For example, the topcoat layer can comprise as its base polymer a polycarbonate, a polyvinyl fluoride, a poly(meth)acrylate (*e.g*., a polyacrylate or a polymethacrylate), a polyurethane, modified (*e.g*., hybrid) polymers thereof, or combinations thereof. See U.S. Patent No. 4,476,293 for a description of exemplary polycarbonate-based polyurethanes useful for the topcoat layer of the invention. See also U.S. Patent Publication No. US-2008-0286576-A1, for a description of further exemplary topcoat layers.

To protect the topcoat layer of the sheet, a polymer liner (*e.g*., a clear polyester liner) or the like may be used and removed before or after the sheet is applied to a substrate.

### Protective Sheet Formation

In one embodiment, each of the individual layers of the protective sheet is prepared before assembly into the final multi-layer protective sheet. Any suitable method for preparation of each can be used as known to those skilled in the art.

For preparation of the carrier layer, for example, a film can be extruded onto a separate carrier film (*e.g*., polyester film) to form a supported carrier layer, after which the resilient layer is formed thereon. The supporting carrier film is removed at some point before both sides of the laminate are able to be coated.

For preparation of the adhesive layer, any suitable method can be used. For example, a film of the desired thickness can be cast onto a release film according to one embodiment and as known to those skilled in the art. In one embodiment, the film of adhesive contained on the release film can be laminated to the resilient layer, after which time the supporting carrier film is removed from the carrier layer for application of the optional topcoat layer.

For preparation of the optional topcoat layer, any suitable method can be used. For example, a topcoat film of the desired thickness can be cast onto a smooth film (*e.g*., polyester) according to one embodiment and as known to those skilled in the art. In one embodiment, the supported topcoat film is then laminated to the exposed side of the carrier layer, opposite from the resilient layer. The smooth film used for formation of the topcoat film can remain in the assembly until application of the sheet to a surface in order to provide extra protection during shipping and storage of the sheet. According to this embodiment, any suitable method can be used to laminate the topcoat layer to the carrier layer. According to another embodiment, the topcoat layer is formed by direct coating onto the carrier layer according to conventional methods.

While the above-described process relies primarily on preparation of individual layers and then adherence of those layers together to form the sheet, according to another embodiment of the invention, some or all of the sheet's layers can be formed simultaneously by co-extrusion. Individual layers may be in-situ polymerized into a film format as described in, for example, U.S. Patent No. 8,828,303, U.S. Patent Publication No. US-2011-0137006-A1, and U.S. Patent Application Nos. 62/306,646 and 62/396,825. No matter what method is used, the process can be a continuous or batch process.

### Protective Sheet Use

Protective sheets of the invention are useful in a range of indoor and outdoor applications in, for example, the transportation, architectural and sporting goods industries. Exemplary applications including those including motorized vehicles and bicycles, among many other articles. Preferably, protective sheets of the invention have smooth, glossy surfaces and a substantially uniform thickness throughout in order to maximize their capability of providing seemingly invisible protection to a surface.

During use, a protective sheet is applied to a surface, preferably in such a way as to conform to the shape of the surface. Particularly when applying protective sheets to non-planar surfaces, recoverability is important and preferred. If a sheet is not very recoverable, micro-cracking can occur when the film is stretched too far. Relief cuts may be needed in that case in order to apply such sheets to substrates, particularly those having a complex surface of convex and concave features. However, according to preferred embodiments of the invention, relief cuts are not necessary when applying protective sheets of the invention to complex surfaces. Such multi-layer protective sheets are readily conformable due to their recoverability.

Multi-layer protective sheets of the invention can be readily and easily applied to a surface based on knowledge of those skilled in the art. The adhesive layer is generally adhered to the surface to be protected after removal of any release liner present thereon to expose the adhesive. When a pressure-sensitive adhesive layer is used, the multi-layer protective sheet can be more easily repositioned before being firmly adhered to a surface.

### TEST METHODS AND EXAMPLES

Exemplary embodiments and applications of the invention are described in relation to the following testing methods.

### Loss Factor Test Method

A dynamic mechanical analyzer available from DA Instruments (New Castle, DE) under the trade designation, TA Instruments DMA Q800 was used to perform this test in tension mode. Nominal sample sizes having a length of 5-12mm, a width of 4-8mm, and a thickness of 0.02-0.2mm were used. A frequency of 1 Hz, strain of 0.3%, and ramp rate of 3°C./minute were used to measure values for determination of the loss factor of a sample.

### Storage Modulus Test Method

A dynamic mechanical analyzer available from DA Instruments (New Castle, DE) under the trade designation, TA Instruments DMA Q800 was used to perform this test in tension mode. Nominal sample sizes having a length of 5-12mm, a width of 4-8mm, and a thickness of 0.02-0.2mm were used. A frequency of 1 Hz, strain of 0.3%, and ramp rate of 3°C./minute were used to measure values for determination of the storage modulus of a sample.

### 90° Peel Adhesion Test Method

Peel adhesion is the force required to remove an adhesive-coated protective sheet sample from a surface. Peel adhesion is measured at a specific angle and rate of removal. In the following examples, peel adhesion force is expressed in Newtons/meter width (N/m) and ounces/inch width (oz/in) of the adhesive-coated protective sheet sample. Peel adhesion forces measured throughout are taken at about twenty-four hours dwell time at 60°C., unless indicated to the contrary.

All tests were conducted according to ASTM D1000 using a 3M™ High Performance PUL2006 available from 3M Company (St. Paul, MN) as the adhesive-coated protective sheet sample of Comparative Example C1 and entrofilm™ 1297 as the adhesive-coated protective sheet sample of Example 1. entrofilm™ 1297 includes an acrylic pressure-sensitive adhesive layer (available separately from entrochem, inc., Columbus, Ohio, under the ECA-153 trade designation) with a polyurethane polycarbonate layer having a thickness of no more than about 1 mil (0.025 mm) cast thereupon. A layer of aliphatic thermoplastic polyurethane having a thickness of about 5 mils (0.13mm) to about 14 mils (0.36mm) is heat-welded to the polyurethane polycarbonate layer. An acrylic topcoat comprising a mixture of about 50% isocyanate (available separately from entrochem, inc., Columbus, Ohio, under the ECA-426 trade designation) and about 50% acrylic polyol (available separately from entrochem, inc., Columbus, Ohio, under the ECA-671 trade designation) is web-polymerized as an exterior layer of the entrofilm™ 1297 protective sheet adjacent the aliphatic thermoplastic polyurethane layer.

A strip (2.54-cm wide) of the sample was applied to a stainless steel panel so that at least 12 lineal centimeters of firm contact resulted. One pass with a 2-kilogram hard rubber roller was used to apply the strip to the panel. The free end of the strip was positioned so that the angle of removal was 90°, and the free end was attached to an adhesion tester clamp, which was thereafter moved away from the panel at a constant rate of 127 inches/minute (3.2 meters/minute). The measured peel adhesion value was recorded.

The peel adhesion test was repeated three times (*i.e*., as Run 1, Run 2, and Run 3) for each of Comparative Example C1 and Example 1. The mean value for each example was then calculated and is reported in Table 1 below. For Comparative Example C1, about 55% adhesive transfer was observed. For Example 1, no adhesive transfer was observed with clean removal of the strip from the stainless steel panel (*i.e*., adhesive failure mode).

**Table 1**

| **Comparative Example C1** | 90° Peel Adhesion [N/m (oz/in)] |
|---|---|
| Run 1 | 1.1 (161.1) |
| Run 2 | 1.1 (162.3) |
| Run 3 | 1.2 (166.9) |
| **Mean** | **1.2 (163.4)** |

| **Example 1** | 90° Peel Adhesion [N/m (oz/in)] |
|---|---|
| Run 1 | 0.9 (128.7) |
| Run 2 | 0.9 (123.5) |
| Run 3 | 0.9 (124.0) |
| **Mean** | 0.9 **(125.4)** |

## Claims

1. A multi-layer protective sheet comprising sequential layers as follows:
optionally, a topcoat layer;
a carrier layer, wherein the carrier layer comprises polycaprolactone-based polyurethane;
a resilient layer, wherein the resilient layer is polycarbonate-based polyurethane; and
an adhesive layer.

2. The sheet of claim 1, comprising the topcoat layer.

3. The sheet of claim 2, further comprising a carrier film on an exterior surface of the topcoat layer.

4. The sheet of any foregoing claim, wherein the resilient layer is free of polycaprolactone-based polyurethane.

5. The sheet of any foregoing claim, further comprising a release film on an exterior surface of the adhesive layer.

6. An article comprising at least one surface having on at least a portion thereof the sheet of any foregoing claim.

7. The article of claim 6, wherein the article comprises a motorized vehicle.

8. A method of using a multi-layer protective sheet to protect a surface on a motorized vehicle, the method comprising:
providing the sheet of any of claims 1 to 5; and
applying the sheet to the surface of the motorized vehicle.

9. The method of claim 8, wherein the surface is at least partially painted.

## Patentansprüche

1. Mehrlagige Schutzfolie, die aufeinanderfolgende Schichten wie folgt aufweist:
optional eine Deckschicht;
eine Trägerschicht, wobei die Trägerschicht Polycaprolacton-basiertes Polyurethan aufweist;
eine flexible Schicht, wobei die flexible Schicht Polycarbonat-basiertes Polyurethan ist; und
eine Klebschicht.

2. Folie nach Anspruch 1, aufweisend die Deckschicht.

3. Folie nach Anspruch 2, ferner aufweisend eine Trägerfolie auf einer Außenfläche der Deckschicht.

4. Folie nach einem der vorstehenden Ansprüche, wobei die flexible Schicht frei von Polycaprolacton-basiertem Polyurethan ist.

5. Folie nach einem der vorstehenden Ansprüche, ferner aufweisend eine Trennfolie auf einer Außenoberfläche der Klebschicht.

6. Artikel, aufweisend zumindest eine Oberfläche, die an zumindest einem Teil derselben die Folie nach einem der vorstehenden Ansprüche aufweist.

7. Artikel nach Anspruch 6, wobei der Artikel ein Kraftfahrzeug aufweist.

8. Verfahren zur Verwendung einer mehrlagigen Schutzfolie zum Schutz einer Oberfläche an einem Kraftfahrzeug, wobei das Verfahren umfasst:
Bereitstellen der Folie nach einem der Ansprüche 1 bis 5; und
Aufbringen der Folie auf die Oberfläche des Kraftfahrzeugs.

9. Verfahren nach Anspruch 8, wobei die Oberfläche zumindest teilweise lackiert ist.

## Revendications

1. Feuille protectrice multicouche comprenant des couches séquentielles comme suit :
éventuellement, une couche de finition ;
une couche porteuse, la couche porteuse comprenant du polyuréthane à base de polycaprolactone ;
une couche élastique, la couche élastique étant du polyuréthane à base de polycarbonate ; et
une couche adhésive.

2. La feuille de la revendication 1, comprenant la couche de finition.

3. La feuille de la revendication 2, comprenant en outre une pellicule porteuse sur une surface extérieure de la couche de finition.

4. La feuille de l'une quelconque des revendications précédentes, dans laquelle la couche élastique est exempte de polyuréthane à base de polycaprolactone.

5. La feuille de l'une quelconque des revendications précédentes, comprenant en outre une pellicule antiadhésive sur une surface extérieure de la couche adhésive.

6. Article comprenant au moins une surface, ladite surface comportant, sur au moins une partie, la feuille de l'une quelconque des revendications précédentes.

7. L'article de la revendication 6, dans lequel l'article comprend un véhicule motorisé.

8. Procédé d'utilisation d'une feuille protectrice multicouche pour protéger une surface sur un véhicule motorisé, le procédé comprenant :
la fourniture de la feuille de l'une quelconque des revendications 1 à 5 ; et
l'application de la feuille à la surface du véhicule motorisé.

9. Le procédé de la revendication 8, dans lequel la surface est peinte au moins partiellement.
